(19) Europäisches Patentamt
European Patent Office
Office européen des brevets

(11) **EP 0 963 564 B1**

(12) **EUROPÄISCHE PATENTSCHRIFT**

(45) Veröffentlichungstag und Bekanntmachung des Hinweises auf die Patenterteilung:
**27.11.2002 Patentblatt 2002/48**

(51) Int Cl.⁷: **G02B 6/20**, G02B 1/04, C08J 7/04

(21) Anmeldenummer: **97949915.9**

(22) Anmeldetag: **12.11.1997**

(86) Internationale Anmeldenummer:
**PCT/DE97/02655**

(87) Internationale Veröffentlichungsnummer:
**WO 98/038537 (03.09.1998 Gazette 1998/35)**

(54) **BIEGSAMER LICHTLEITER MIT FLÜSSIGEM KERN**

FLEXIBLE LIGHT GUIDE WITH A LIQUID CORE

CONDUCTEUR OPTIQUE FLEXIBLE A AME LIQUIDE

(84) Benannte Vertragsstaaten:
**AT BE CH DE FR GB LI LU**

(30) Priorität: **28.02.1997 DE 19708295**

(43) Veröffentlichungstag der Anmeldung:
**15.12.1999 Patentblatt 1999/50**

(73) Patentinhaber: **Nath, Gunther**
**81369 München (DE)**

(72) Erfinder: **Nath, Gunther**
**81369 München (DE)**

(74) Vertreter: **Eisenführ, Speiser & Partner**
**Arnulfstrasse 25**
**80335 München (DE)**

(56) Entgegenhaltungen:
**EP-A- 0 633 257        WO-A-94/05712**
**WO-A-96/24625        DE-A- 4 233 087**
**US-A- 5 412 750**

**Beschreibung**

Die Erfindung betrifft einen Flüssigkeitslichtleiter gemäß dem Oberbegriff des Anspruchs 1.

Aus der deutschen Patentanmeldung DE-A1-42 33 087 ist ein Flüssigkeitslichtleiter bekannt, welcher einen zylindrischen schlauchartigen Mantel, bestehend aus einem Fluorkohlenstoff-Polymer, und einen vom Mantel umgebenen Kern aus einer lichtleitenden wässrigen Lösung enthält. Der Mantel ist auf seiner Innenseite mit einer dünnen Schicht aus einem vollständig amorphen Copolymer, das auf einer Kombination von Tetrafluorethylen und einem perfluorierten zyklischen Ether basiert, überzogen. Das Copolymer, aus dem die Innenschicht besteht, ist von der Firma DuPont unter dem Handelsnamen Teflon® AF erhältlich.

Teflon® AF läßt sich in bestimmten perfluorierten Flüssigkeiten im Prozentbereich lösen, wobei sich als Lösungsmittel die Fluorinert-Flüssigkeiten FC 75, FC 77 oder FC 40 von der Firma 3 M eignen. Das Aufbringen der AF-Schicht auf die Innenoberfläche eines Fluorkohlenstoff-Schlauches wie z.B. Teflon® FEP geschieht in einfacher Weise durch Benetzung der Schlauchinnenfläche mit der Teflon® AFhaltigen Lösung und anschließender Verdunstung des Lösungsmittels mit Hilfe eines Luftstromes oder Unterdrucks. Die Dicke der Schicht beträgt einige wenige μm, was im Falle eines FEP-Substrat-Schlauches für die Totalreflexion von sichtbaren und ultravioletten Strahlen ausreichend ist. Die Vorteile der totalreflektierenden Teflon®-AF-Schicht bestehen in dem extrem niedrigen Brechungsindex des Materials im Bereich 1,29 - 1,32, der absoluten Transparenz, die mit Quarzglas vergleichbar ist, und der chemischen Inertheit. Als Flüssigkeiten für den Lichtleiter werden die bereits seit über zwanzig Jahren bewährten, in den Druckschritten DE-C2-24 06 424 und DE-A1-40 14 363.5 beschriebenen wässrigen salzhaltigen Lösungen wie Chloride oder Phosphate wegen ihrer photochemischen Stabilität im ultravioletten Spektralbereich bevorzugt. Diese Flüssigkeiten, wie z.B. $CaCl_2$ in $H_2O$, $NaH_2PO_4$ in $H_2O$, sollten einen Brechungsindex aufweisen, der höher ist als der der totalreflektierenden Teflon® AF-Schicht, wobei wegen des extrem niedrigen Brechungsindex der Teflon® AF-Schicht bereits Brechzahlen ab n = 1,36 für die Flüssigkeit verwendet werden können. Ein Wert von mindestens 50° für den optischen Aperturwinkel 2α sollte erreicht werden, wobei sich α mit Hilfe der einfachen Formel:

$$\sin \alpha = \sqrt{n^2_{Kern} - n^2_{Mantel}}$$

berechnen lässt.

Flüssigkeitslichtleiter mit einem Kern, bestehend aus einer wässrigen Phosphat-Lösung wie z.B. einer Lösung von $NaH_2PO_4$ in Wasser, die eine besonders hohe photochemische Stabilität im kurzwelligen ultravioletten UVB und UVC Spektralbereich aufweist (s.

P 40 14 363.5), lassen sich eigentlich nur durch Verwendung einer totalreflektierenden Schicht mit einem Brechungsindex von etwa 1.31 wie z.B. mit Teflon® AF 1600 realisieren, da derartige Lösungen keinen höheren Brechungsindex als n = 1,38 zulassen wegen Salzausfalls in der Kälte. Ein weiterer Vorteil von Teflon® AF besteht darin, daß das Material auf Substraten bestehend aus Fluorkohlenstoff-Polymeren sehr gut haftet, insbesondere nach Durchführung eines Temperungsprozesses, bei welchem die Schicht auf Temperaturen bis knapp über die Temperatur ihres Glasüberganges erhitzt wird. Ein gravierender Nachteil von Teflon® AF besteht in seinem extrem hohen Preis von US$ 10,00 pro Gramm, der bei der Herstellung der Flüssigkeitslichtleiter merklich zu Buche schlägt. Ein weiterer Nachteil von Teflon® AF besteht darin, daß die Haftung der Schicht nur auf Substratmaterialien gut ist, die ebenfalls wie Teflon® AF aus einem Fluorkohlenstoff-Polymer bestehen, und dass Filme aus Teflon AF nicht elastisch sind.

Diese Tatsache hat insofern nicht gestört, als in den vergangenen zwanzig Jahren die Flüssigkeitslichtleiter, welche auf dem Markt vorherrschten, aus Fluorkohlenstoff-Mantelschläuchen (Teflon® FEP), gefüllt mit einer wässrigen Lösung aus $CaCl_2$, bestanden, so daß die Aperturerhöhung durch Innenbeschichtung dieser Teflon®-Schläuche mit Teflon® AF relativ problemlos durchführbar war und keine neuen Substratschlauch- Schicht Kombinationen entwickelt werden mussten. Es wäre jedoch wünschenswert, wenn auch andere Schlauchmaterialien aus Silikon oder Polyurethan innen beschichtbar wären, so daß neue Lichtleiter mit neuen Eigenschaften wie z.B. mit erhöhter Flexibilität, hergestellt werden könnten. Auch wäre die Innenbeschichtung von Glasröhren für die Herstellung lichtleitender Küvetten wünschenswert

Fitz beschreibt in EP-B1-02 46 552 ein in bestimmten acetonähnlichen Flüssigkeiten lösliches nahezu amorphes Fluorkohlenstoff-Polymer und empfiehlt es zur Innenbeschichtung von Flüssigkeitslichtleitern. Dieses Material, ein Terpolymer, bestehend aus den Komponenten TFE (Tetrafluorethylen), HFP (Hexafluorpropylen) und VDF (Vinylidenfluorid), ist hochtransparent und haftet nicht nur auf Plastik-Substraten bestehend aus Fluorkohlenstoff-Polymeren, hat jedoch den Nachteil, daß der optische Brechungsindex mit n = 1,36 wesentlich höher als der von Teflon® AF ist und somit für Flüssigkeitslichtleiter, die im ultravioletten Spektralbereich übertragen sollen, kaum verwendbar ist.

Ein ideales Beschichtungsmaterial für die Totalreflexion von ultravioletter und sichtbarer Strahlung für Flüssigkeitslichtleiter sollte folgende Eigenschaften aufweisen:

1) Das Material sollte ein perfluoriertes Polymer sein wegen des dann zu erwartenden minimalen Brechungsindex, der wünschenswerterweise $\leq$ 1,33, dem Wert von $H_2O$, sein sollte, und wegen der dann zu erwartenden chemischen Inertheit gegenüber den meisten Flüssigkeiten.

2) Das Material sollte im ultravioletten und sichtbaren Bereich möglichst transparent sein und eine möglichst geringe Restkristallinität besitzen.

3) Das Material sollte im Bereich von einigen Prozenten in einer Flüssigkeit löslich sein, damit es durch einfaches Benetzen bei Raumtemperatur mit anschließendem Wegdunsten des Lösungsmittels auf die Innenwandung des Lichtleiterschlauches aufgebracht werden kann.

4) Die Temperatur, bei der das Material zu fließen anfängt, sollte nicht so hoch sein, daß der erforderliche Temperprozeß die meisten Schlauchmaterialien ausschließt, und bei Raumtemperatur sollte das Material eine gewisse Elastizität besitzen, so daß außer Schläuchen aus Fluorkohlenstoff-Polymeren auch noch andere Plastikmaterialien wie zum Beispiel Elastomere beschichtet werden können.

5) Das Material sollte aber auf dem für Flüssigkeitslichtleiter wichtigen und bewährten Fluorkohlenstoff Polymerschlauch gut haften, d.h. es sollte eine sehr geringe Oberflächenenergie haben im Bereich von 10 bis 16 mN/m (10 bis 16 dyn/cm) oder mit anderen Worten: es sollte extrem hydrophob sein.

6) Das Material sollte einfach und billig herzustellen sein, damit es kostenmäßig bei den Flüssigkeitslichtleitern keine Rolle spielt.

In den deutschen Patentanmeldungen DE-A1-196 46 928.7 und DE-A1-197 08 295.5 wurden bereits zu Teflon® AF alternative Beschichtungsmaterialien für Flüssigkeitslichtleiter angegeben, wie Mischungen von Teflon® AF mit Ölen bestehend aus Perfluorpolyethern, wobei sich wiederum hochtransparente, extrem niedrig brechende und elastische Schichten mit sehr guten totalreflektierenden Eigenschaften ergaben. Die Haftung dieser Mischschichten auf Substraten aus Glas ist ebenfalls wesentlich besser im Vergleich zu reinen Teflon® AF Schichten.

In den beiden oben erwähnten deutschen Patentanmeldungen wird auch ein neues von der Firma DuPont herausgebrachtes Beschichtungsmaterial, Teflon® SF (soluble Fluopolymer) erwähnt, welches in perfluorierten Flüssigkeiten wie zum Beispiel in PF 5080 ($C_8F_{16}$) von der Firma 3 M löslich ist, und welches sich ebenfalls hervorragend für die Innenbeschichtung von Flüssigkeitslichtleitern eignet. Auch Teflon® SF kann man mit hochsiedendem (Sp > 250°C) Perfluorpolyethern versetzen, wobei man hochtransparente Filme mit niedriger Brechzahl (n ≤ 1.32), guter Elastizität und Haftung auf einer Vielzahl von Subtratmaterialien wie Fluorpolymeren, Silikon oder Glas enthält. Die vorliegende Patentanmeldung hat eine etwas ausführlichere Beschreibung von Innenbeschichtungen von Flüssigkeitslichtleitern mit Teflon® SF zum Ziel, einem Copolymer bestehend aus den beiden Monomerkomponenten TFE und HFP (Hexafluorpropylen) oder TFE und einem Perfluoralkylvinylether.

Das in der EP-B1-O 656 912 von DuPont beschriebene Material, ein Copolymer bestehend aus zwei Fluormonomeren, wie z.B. aus den Komponenten TFE (Tetrafluoräthylen) und HFP ( Hexafluorpropylen) mit einem ungewöhnlich hohen Anteil von HFP im Bereich von 25 bis 50 Gewichtsprozenten, erfüllt die Kriterien 1) bis 6) in zufriedenstellender Weise. Statt HFP kann das TFE auch mit einem Perfluoralkylvinyläther wie z.B. PMVE (Perfluormethylvinyläther) oder PPVE (Perfluorpropylvinyläther) kopolymerisiert werden, wobei der Anteil des Perfluoralkylvinyläthers ebenfalls im Bereich von 25 bis 50 Gewichtsprozenten liegen kann.

In einer Zusammensetzung dieses Copolymers von 92 Gewichtsprozenten TFE und nur 8 Gewichtsprozenten HFP handelt es sich um das altbekannte Material Teflon® FEP, welches sich als totalreflektierendes Manteimaterial für Flüssigkeitslichtleiter bereits seit vielen Jahren auf dem Markt gut bewährt hat. Das Material FEP weist allerdings noch eine gewisse Restkristallinität auf, welche sich bei der Totalreflexion durch Lichtstreuung vor allem im kurzwelligen UV-Bereich störend bemerkbar macht. Dasselbe gilt von dem auf dem Markt befindlichen Hyflon® MFA der Firma Ausimont, welches aus dem Kopolymer TFE/PMVE mit nur 5 bis 10% Gewichtsanteilen PMVE besteht. Außerdem kann man Teflon® FEP bzw. Hyflon® MFA oder Teflon® PFA, ein Kopolymer, bestehend aus TFE mit ca. 5% Gewichtsanteil von PPVE nicht bei Raumtemperatur in perfluorierten Flüssigkeiten lösen und somit auch nicht aus Lösung zum Beschichten verwenden. Auch ist der Brechungsindex von FEP mit n = 1,34 noch etwas zu hoch, vor allem im Zusammenhang mit einer wässrigen Phosphatlösung als lichtleitender Flüssigkeit, wie z.B. einer Lösung von $NaH_2PO_4$ in $H_2O$, deren Brechungsindex sich maximal auf n = 1,38 einstellen läßt.

Die Erfindung stellt sich die Aufgabe, einen Lichtleiter zur Verfügung zu stellen, der den vorstehend unter Ziffer 1) bis 6) genannten Kriterien genügt und außerdem die als nachteilig empfundene Restkristallinität des im europäischen Patent EP-B1 0 656 912 beschriebenen Materials beseitigt.

Diese Aufgabe wird bei einem Lichtleiter der eingangs erwähnten Art gelöst durch die Merkmale des kennzeichnenden Teils von Anspruch 1. Weiterbildungen dieses Lichtleiters sind in den Unteransprüchen beschrieben.

Die Erfindung baut auf dem überraschenden experimentellen Befund auf, daß beim Polymer TFE/HFP durch eine drastische Erhöhung des HFP-Anteils im Vergleich zu Teflon® FEP um einen Faktor 3 bis 5 sich die Restkristallinität im Vergleich zum Teflon® FEP noch einmal erheblich reduzieren läßt, d.h. das Material wird transparenter und ist somit weniger lichtstreuend und es läßt sich außerdem bei Raumtemperatur und atmosphärischem Druck in perfluorierten Flüssigkeiten gut lösen, so daß das bequeme Beschichtungsverfahren von Schlauchinnenoberflächen aus Lösung, analog dem Verfahren mit Teflon® AF leicht möglich ist. Das gleiche gilt für die Copolymere bestehend aus den Monomeren TFE und Perfluoralkylvinylether (TFE/PMVE oder TVE/PPVE) mit im Gegensatz zu Hyflon® MFA und Teflon® PFA drastisch erhöhten Gewichtsanteilen der Perfluoralkylvinylether Komponente. Im Gegensatz zu Schichten aus Teflon® AF sind Schichten aus dem flüssigkeitslöslichen TFE/HFP bzw. TFE/PMVE oder TVE/ PPVE- Polymer elastisch und auch auf nicht fluorhaltigen Plastikmaterialien sowie Glasoberflächen besser haftend.

Die Experimente mit dieser neuen Gruppe perfluorierter Copolymere im Hinblick auf seine Eignung als dünne totalreflektierende Schicht für Flüssigkeitslichtleiter führten zu folgenden Ergebnissen:

Die Copolymere TFE/HFP oder TVE/PMVE oder TFE/PPVE mit einem HFP (PMVE,PPVE)- Anteil von 25 bis 50 Gewichtsprozenten, gelöst bei Raumtemperatur in einer perfluorierten Flüssigkeit wie z.B. PF 5080 von der 3 M Corporation oder generell in hochfluorierten Lösungsmitteln wie in hochfluorierten Cykloalkanen oder Aromaten in einer Konzentration von etwa 3 bis 10 Gewichtsprozenten, eignen sich für die Beschichtung von Substraten aus Kohlenstoff-Fluorpolymeren insbesondere von Substraten aus Teflon® FEP.

Das Material haftet ausgezeichnet auf einer Substratunterlage bestehend aus Fluorkohlenstoff-Polymeren, insbesondere aus Teflon® FEP. Durch einmalige Benetzung der Schlauchinnenoberfläche eines Teflon® FEP-Schlauches mit einer 3%igen Lösung des TFE/HFP (PMVE,PPVE)-Polymers läßt sich eine Schicht von einigen wenigen µm Dicke (2 bis 3 µm) aufbringen. Nach der Abdunstung des Lösungsmittels durch einen schwachen Luftstrom verbleibt eine auf der Innenoberfläche des Teflon® FEP-Schlauches gut haftende hochtransparente Schicht des aus der Lösung abgeschiedenen Copolymers, deren Haftung noch verbessert werden kann durch Tempern des beschichteten FEP-Schlauches bei ca. 160°C, im Bereich der Schmelztemperatur des Copolymers.

Die Messung des Brechungsindex einer aus Lösung aufgebrachten TFE/PMVE-Schicht mit Hilfe eines Abbé-Refraktometers ergab einen Brechungsindex von n = 1,328. ( Der PMVE-Anteil war etwa 40% bei diesem gelösten Copolymer). Dieser Wert des Brechungsindex liegt zwar nur wenig unter dem Wert des Brechungsindex von Teflon® FEP, so daß nur eine unwesentliche Erhöhung der numerischen Apertur eines konventionellen Flüssigkeitslichtleiters, welcher aus einem Teflon® FEP-Schlauch, gefüllt mit einer wässrigen Lösung aus $CaCl_2$, besteht, zu erwarten ist. Dennoch ergibt sich ein Vorteil für den Flüssigkeitslichtleiter, und zwar dadurch, daß die aus Lösung aufgebrachte TFE/ PMVE-Schicht eine wesentlich geringere Restkristallinität als das konventionelle Teflon® FEP- bzw. Hyflon® MFA- oder Teflon® PFA-Material aufweist.

Die Qualität der Totalreflexion, bei der bekanntlich nach dem berühmten Prismenversuch von Isaac Newton die totalreflektierte Welle in einer Tiefe von einigen Wellenlängen in das optisch dünnere Medium eindringt, ist im Vergleich zur Reflexion von Teflon® FEP besser, bzw. verlustärmer wegen reduzierter Streuung. Als unmittelbare Folge davon verbessert sich die Transmission der Flüssigkeitslichtleiter, wenn auch bei etwa gleichbleibender theoretisch berechneter numerischer Apertur. Die tatsächliche experimentell zu beobachtende Ausgangsdivergenz des aus dem Lichtleiter austretenden Strahlungsbündels ist aber etwas erhöht, da die Teilstrahlen, welche im Lichtleiter mehr Reflexionen erleiden und welche im austretenden Strahlungsbündel den höher divergenten Anteil bilden, durch die erhöhte Transparenz der reflektierenden Schicht weniger gedämpft werden.

Im Vergleich zu dem in seinen optischen Eigenschaften einmaligen Teflon® AF hat die aus Lösung aufgebrachte TFE/PMVE-Schicht jedoch noch den Nachteil, daß ihr Brechungsindex mit n = 1,328 noch um wenige Hundertstel höher ist. Dieser kleine Unterschied im Brechungsindex macht immerhin eine Differenz von ca. 10° in der numerischen Apertur des Lichtleiters aus.

Es hat sich nun überraschenderweise gezeigt, daß man den Brechungsindex der TFE/PMVE-Schicht noch weiter reduzieren kann, indem man zu der Lösung bestehend aus einigen Gewichtsprozenten TFE/PMVE in der perfluorierten Flüssigkeit PF 5080 von 3M eine dem Feststoffgehalt des Copolymers etwa vergleichbare Menge eines hochmolekularen und hochsiedenden Perfluorpolyethers hinzufügt. Bereits ein kurzer Rührvorgang zeigt, daß der Perfluorpolyether (PFPE) sich vollständig löst. Erzeugt man mit dieser komplexen Lösung bestehend aus TFE/PMVE und dem PFPE, in etwa gleichen Teilen gelöst in dem perfluorierten Lösungsmittel PF 5080, in der gewohnten Weise durch Benetzung einer Substratunterlage und anschliessenden Verdunstung des Lösungsmittels eine Schicht, so beobachtet man, daß diese Schicht hochtransparent ist und sich nach Durchführung einer Temperung bei ca. 160°C trocken anfühlt. Durch Wägung ist festzustellen, daß der Perfluorpolyether vollständig in die TFE/PMVE-Schicht eingebaut ist. Dementsprechend ist auch die Dicke der Schicht etwa zweimal so groß wie eine reine TFE/ HFP-Schicht ohne Beigabe des PFPE. Diese komplexe Schicht haftet ausgezeichnet auf Unterlagen bestehend aus Fluorkohlenstoff-Polymeren aber auch auf anderen Substratmaterialien wie z.B. Glas, Silikon, Kautschuk oder Polyurethan.

Eine Messung des Brechungsindex der oben beschriebenen Mischschicht, bestehend aus in etwa gleichen Gewichtsanteilen TFE/PMVE und PFPE (z.B. Fomblin oder Galden von Ausimont), ergibt einen Wert von n = 1,315, der durchaus vergleichbar ist dem Wert von Teflon® AF 1600.

Obwohl das Material, bestehend aus TFE/PMVE und PFPE, nicht absolut amorph ist wie Teflon® AF, sind seine optischen Eigenschaften im Hinblick auf die Totalreflexion, die Transmission und die Erhöung der numerischen Apertur für Flüssigkeitslichtleiter doch vergleichbar gut. Der große Vorteil der erfindungsgemäßen Schicht besteht jedoch darin, daß im Vergleich zu Teflon® AF, welches die sehr teure und technisch nur aufwendig zu behandelnde PDD-Komponente enthält, die Kosten wesentlich geringer sind und der Herstellungsprozeß des TFE/PMVE Copolymers wesentlich einfacher ist. Die Kosten für das PFPE-Öl liegen im Bereich von US$ 0,10/g im Vergleich zu US$ 10,00/g für Teflon® AF.

Die gleiche Möglichkeit der Beimischung eines PFPE ergibt sich auch bei Lösungen von TFE/HFP Copolymeren in perfluorierten Lösungsmitteln, mit entsprechender Reduzierung des Brechgungsindex der aus der Lösung aufgebrachten Schicht. Da Flüssigkeitslichtleiter überwiegend für den ultravioletten Bereich des optischen Spektrums verwendet werden, kommen als Flüssigkeiten hauptsächlich wässrige Salzlösungen wie $CaCl_2/H_2O$-Lösungen mit einem Brechungsindex von maximal 1,435 für die Transmission im UVA- und UVB-Bereich, oder $NaH_2PO_4/H_2O$-Lösungen mit einem maximalen Brechungsindex von n = 1,38 für die Transmission im UV-Bereich mit Einschluß des UVC-Bereichs, d.h. bis etwa 220nm. Diese wichtigen Salzlösungen kontrastieren in vorteilhafter Weise mit dem in der erfindungsgemäßen Mischschicht verwendeten flüssigen Perfluorpolyether PFPE, insofern als die Oberflächenenergie der beiden Flüssigkeiten extrem weit auseinander liegen. So beträgt die Oberflächenenergie des PFPE 10 bis 15 m N/m (10 bis 15 dyn/cm) und die Oberflächenenergie der Salzlösungen liegt bei 70 bis 80 m N/m (70 bis 80 dyn/cm). Letztere ist extrem polar, während der PFPE extrem apolar ist. Die Phobie zwischen diesen beiden Flüssigkeiten sorgt dafür, daß das in der reflektierenden TFE/HFP-Schicht eingebaute PFPE-Öl auch über lange Zeiträume durch die kontaktierende Salzlösung nicht herausgewaschen werden kann, was sich nachteilig auf die Transmission der Lichtleiter auswirken würde.

Aber auch die anderen wichtigen Flüssigkeiten, welche bei Flüssigkeitslichtleitem im sichtbaren Spektralbereich eingesetzt werden, sind meist ebenfalls polare Flüssigkeiten, die auch hygroskopisch oder zumindest mit Wasser vermischbar sind, wie z.B. Triethylenglykol oder DMSO. Auch diese Flüssigkeiten sind mit dem PFPE-Öl in keiner Weise mischbar, so daß auch hier keine Gefahr der Herauslösung des PFPE-Öls aus der Schicht besteht.

Bei der herkömmlichen Innenbeschichtung von FEP-Schläuchen mit Teflon® AF genügt schon eine Schichtdicke von 3 µm (3 µ) für den optimalen Effekt auf die Transmission von ultravioletter Strahlung. Verwendet man jedoch andere Materialien für den Trägerschlauch, wie z.B. Teflon® PFA oder Hyflon® MFA, Teflon® PTFE oder ETFE, so sind für die Erzielung maximaler Transmission im UV-Bereich bei der Innenbeschichtung mit Teflon® AF Schichtdicken von mindestens 5 µm (5 µ) erforderlich. Der Grund für die unterschiedlichen Werte der Mindestschichtdicke der Reflexionsschicht bei verschiedenen Materialien für den Trägerschlauch erklärt sich aus der unterschiedlichen optischen Güte der Trägermaterialien selbst im Hinblick auf ihre Eignung als totalreflektierendes Medium für Flüssigkeitslichtleiter.

Wenn das Trägermaterial hohe optische Güte besitzt, wie im Falle von Teflon® FEP, macht es nicht so viel aus, wenn bei der Totalreflexion noch ein kleiner Bruchteil der Strahlung in das Trägermedium eindringt. Hat das Trägermedium jedoch schlechte optische Qualität, muß die totalreflektierende Schicht dicker sein, damit der reflektierte Strahl das Trägermedium nicht mehr erreicht. Es macht in solchen Fällen durchaus Sinn, eine Doppelschicht auf dem Trägermedium aufzubauen. Die zunächst auf dem Trägerschlauch innen aufgebrachte Schicht besteht aus dem aus Lösung aufbringbaren Copolymer TFE/HFP, wie vorher beschrieben, mit einer Schichtdicke von ca. 3µm (3 µ.) Diese Schicht hat bereits eine hervorragende optische Qualität, besser als die von FEP wegen ihrer geringeren Restkristallinität. Auch der Brechungsindex liegt mit n = 1,33 sehr niedrig. Auf diese erste Schicht wird dann eine dünne, etwa nur 2 µm (2 µ) dicke zweite Schicht aus Teflon® AF aufgebracht, nachdem die zuerst aufgebrachte TFE/HFP-Schicht einem Temperungsprozeß unterworfen worden ist. Mit dieser Technik wird das Teflon® AF zwar nicht vollständig ersetzt, aber man kommt dann mit weniger AF-Material bei der Beschichtung aus, was kostensparend wirkt.

Im folgenden wird die Erfindung anhand von Ausführungsbeispielen und einer Zeichnung näher erläutert:

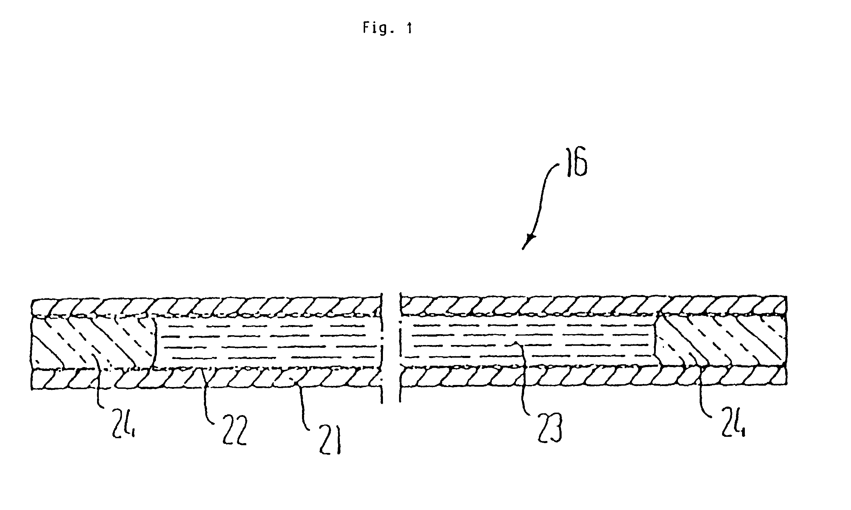

Fig. 1 zeigt einen Längsschnitt durch einen Flüssigkeitslichtleiter, bestehend aus einem flexiblen Mantelschlauch 21, der auf der inneren Oberfläche des Mantelschlauches aufgebrachten reflektierenden Schicht 22, der Füllflüssigkeit 23 und den an beiden Enden zur Abdichtung befindlichen zylindrischen Qaurzstöpseln 24.

**Beispiel 1:**

Flüssigkeitslichtleiter mit einem Teflon® FEP-Schlauch 21, der auf seiner Innenoberfläche eine dünne Schicht 22, bestehend aus dem Copolymer TFE/HFP und einem Perfluorpolyether, aufweist

Der FEP-Schlauch 21, dessen Dimensionen 5mm Innendurchmesser und 1500mm Länge betragen, wird intern mit einer Lösung benetzt, die folgende Zusammensetzung hat: 3 Gewichtsprozent TFE/HFP Copolymer, gelöst in dem perfluorierten Lösungsmittel PF5080 von 3 M, mit Siedepunkt von 101°C, zusätzlich versetzt mit etwa 2 Gewichtsprozent PFPE (Fomblin oder Galden HT 270 von Ausimont).

Die Lösung von 3% TFE/HFP oder TFE/PMVE in PF 5080 (3 M) werden von der Firma DuPont hergestellt und unter der Bezeichnung Teflon® SF (Soluble Fluoropolymer) in den Handel gebracht. Der mit der Teflon® SF/PFPE-Lösung innen vollständig benetzte, beidseitig offene FEP-Schlauch 21 wird senkrecht aufgehängt und 12 Stunden in dieser Position belassen. Auf der Innenoberfläche des FEP-Schlauches bildet sich durch die Adhäsionskräfte ein kohärenter Flüssigkeitsfilm aus. Nach Verdunstung des PF 5080 Lösungsmittels bleibt auf der inneren Oberfläche des FEP-Schlauches nach ca. 12 Stunden ein gleichmäßiger hochtransparenter kohärenter Film 22 haften, dessen Dicke etwa 3 µm beträgt. Dieser so beschichtete Schlauch wird dann anschließend getempert, zunächst 1/2 Stunde bei 110°C, um das restliche PF 5080-Lösungsmittel aus der Schicht auszutreiben, und dann noch ca. 1/2 Stunde bei 160°C.

Das PFPE-ÖI, z.B. Fomblin oder Galden von Ausimont, hat vorzugsweise einen hohen Siedepunkt von 270°C, so daß bei diesem Temperungsvorgang kein ÖI aus der Schicht entweicht. Der Temperungsprozeß verbessert aber die an sich schon gute Haftung der Schicht auf der FEP-Unterlage.

Eine auf dem Prisma des Refraktometers aus der gleichen Beschichtungslösung aufgebrachte Schicht ergibt den Brechungsindex n = 1,318. Der mit der TFE/HFP-PFPE-Innenschicht versehene FEP-Schlauch 21 wird mit der üblichen $CaCl_2/H_2O$-Lösung 23 (n = 1,435) gefüllt und an beiden Enden durch Quarzglasstöpsel 24 abgedichtet. Auf diese Weise erhält man einen Flüssigkeitslichtleiter, dessen numerische Apertur einem Winkel von 70° für den maximalen Lichteintrittswinkel entspricht. Überraschend gut ist auch die Transmission des Lichtleiters. Sie zeigt bei einem Einfallswinkel von 60° und einer Wellenlänge von λ = 450nm den Wert von 82%. Aufgrund der durch die Beschichtung 22 erhöhten numerischen Apertur von 0,47 auf 0,58 für sin α reduzieren sich die durch Biegung des Lichtleiters hervorgerufenen Strahlungsverluste auf ein Drittel. Man kann diese Verbesserungen der optischen Eigenschaften durchaus mit den Verbesserungen vergleichen, die man durch Innenbeschichtung eines FEP-Schlauches mit dem sehr viel teureren und hochwertigen Material Teflon® AF erreicht.

**Beispiel 2:**

Flüssigkeitslichtleiter mit einem Hyflon® MFA-Schlauch (Ausimont), Ø5 x 1500mm, mit Innenbeschichtung, bestehend aus einer TFE/PMVE-Schicht aus 3%iger Lösung in FC 75 oder PF 5080 von 3M, aber ohne Zusatz von PFPE-ÖI. Dicke der Schicht: 3 µm (3µ)

Der Gewichtsanteil der PMVE Komponente in dem Copolymer der Schicht beträgt etwa 40%. Füllt man diesen beschichteten MFA-Schlauch mit einer $CaCl_2/H_2O$-Lösung, n = 1,435, so erhält man einen Lichtleiter mit einer Transmission im blauen Spektralbereich (λ = 450nm) von 60%, unter den gleichen Versuchsbedingungen wie in Beispiel 1). Beschichtet man den MFA Schlauch intern mit einer TFE/MVE Schicht von 5 µm (5µ) Dicke, so ergibt sich bereits eine Transmission von 80% im blauen Spektralbereich. Da der gleiche Flüssigkeitslichtleiter jedoch mit einem unbeschichteten Hyflon® MFA-Schlauch nur eine Transmission von 25% im blauen Spektralbereich aufweist, bewirkt die 3 µm (3 µ) dicke Schicht aus Teflon® SF schon eine beachtliche Verbesserung der Transmission, und die 5 µm (5µ) dicke Schicht erlaubt Transmissionswerte im Spitzenbereich.

Fügt man zu der Beschichtungslösung Teflon® SF mit 3% TFE/HFP bzw. TFE/PMVE Gehalt in dem perfluorierten Lösungsmittel PF 5080 (3 M) noch einmal die dem TFE/PMVE Gehalt entsprechende gleiche Menge PFPE-ÖI hinzu, z.B. Fomblin oder Galden HT 270 von Ausimont, und erzeugt durch Benetzung mit dieser Lösung eine Innenschicht in dem MFA-Schlauch von ca. 5 µm (5 µ) Dicke, so steigt die Transmission des aus diesem Schlauch gebauten Flüssigkeitslichtleiters im blauen Spektralbereich auf Spitzenwerte von über 80%.

Statt der Perfluorpolyether Fomblin® oder Galden® von Ausimont kann man auch den Perfluorpolyether Krytox® von DuPont verwenden. Wichtig ist nur, daß der als Additivum zur Teflon® SF-Lösung verwendete Perfluorpolyether folgende Eigenschaften hat: Der PFPE soll einen möglichst hohen Siedepunkt haben, möglichst über 200°C, besser noch über 250°C. Sein Brechungsindex sollte ≤ 1,31 sein. Auch andere perfluorierte hochsiedende Öle als Perfluorpolyether mit diesen Eigenschaften sind als Zusätze zur Teflon® SF-Lösung möglich.

**Beispiel 3:**

Flüssigkeitslichtleiter mit einem Teflon® FEP-Schlauch, Ø5 x 1500mm, mit Innenbeschichtung, wobei die Innenschicht als Doppelschicht ausgebildet ist

Die an das FEP-Substrat angrenzende Schicht besteht aus dem Copolymer TFE/HFP und hat eine Dicke von ca. 2 bis 3 µm (2 bis 3 µ). Auf die TFE-HFP-Schicht wird eine weitere Schicht aufgebracht, bestehend aus Teflon® AF, z.B. Teflon® AF 1600. Beide Schichten werden aus Lösung aufgebracht. Die zweite AF-Schicht wird erst aufgebracht, nachdem die TFE/HFP-Schicht getempert wurde bei einer Minimaltemperatur von 110°C. Die Dicke der zweiten Teflon® AF-Schicht beträgt 1 bis 2 µm bis (1 bis 2 µ). Auch dieser Lichtleiter zeigt im blauen Spektralbereich eine Spitzentransmission von über 80% und hat den Vorteil, daß die erforderliche Menge des teuren Teflon® AF für die Beschichtung auf ein Minimum reduziert werden kann.

**Beispiel 4:**

Ein Flüssigkeitslichtleiter aus einem Teflon® FEP Schlauch, 5øx 1500 mm, innenbeschichtet mit einer 3 µm (3µ) dicken Schicht aus dem Copolymer TFE/PMVE, gefüllt mit einer Lösung CaCl$_2$ in H$_2$O mit n= 1,435 ergibt eine Transmission im blauen Spektralbereich von 80%. Mit einer Beschichtung aus Teflon AF® 1600 ergibt dieser Lichtleiter eine Transmission von 84%, also nur unwesentlich mehr. Ohne irgendeine Beschichtung liefert dieser Lichtleiter eine Transmission von nur 71%, d.h. die Schicht bestehend aus TFE/PMVE (40% Gewichtsanteil) auch ohne PFPE Zusatz liefert hervorragende Transmissionswerte.

**Patentansprüche**

1. Lichtleiter mit flüssigem Kern (23) und einem schlauchartigen Mantel (21) aus Plastikmaterial, wobei die innere Oberfläche des schlauchförmigen Mantels (21) mit einer Schicht (22) überzogen ist, welche ein Copolymer enthält, bestehend aus Tetrafluorethylen (TFE) und einer zweiten Komponente,
   **dadurch gekennzeichnet,daß**
   die zweite Komponente Hexafluorpropylen (HFP), Perfluormethylvinylether (PMVE) oder Perfluorpropylvinylether (PPVE) ist, wobei der Anteil der zweiten Komponente im Bereich von 25 bis 50 Gew.-% liegt.

2. Lichtleiter nach Anspruch 1, **dadurch gekennzeichnet, daß** die aus dem Copolymer bestehende Schicht (22) aus einer Lösung des Copolymers in einem hochfluorierten Cykloalkan- oder aromatischem Lösungsmittel aufgebracht wurde.

3. Lichtleiter nach Anspruch 1 oder 2, **dadurch gekennzeichnet, daß** die Dicke der Schicht (22) im Bereich von 2 bis 8 µm liegt.

4. Lichtleiter nach einem der vorhergehenden Ansprüche, **dadurch gekennzeichnet, daß** der schlauchartige Mantel (21) aus einem fluorhaltigen Polymermaterial besteht.

5. Lichtleiter nach Anspruch 4, **dadurch gekennzeichnet, daß** der schlauchartige Mantel (21) aus einem der Materialien Teflon® FEP, Teflon® PTFE, Teflon® PFA, Teflon® ETFE, THV oder Hyflon® MFA besteht.

6. Lichtleiter nach einem der Ansprüche 1 bis 3, **dadurch gekennzeichnet, daß** der schlauchartige Mantel (21) aus einem nicht fluorhaltigen Thermoplast oder Elastomer wie Polyurethan oder Silikon besteht.

7. Lichtleiter nach einem der Ansprüche 1 bis 3, **dadurch gekennzeichnet, daß** die Schicht (22) neben dem Copolymer TFE/HFP bzw. TFE/PMVE bzw. TFE/PPVE noch eine perfluorierte Flüssigkeit mit einem Siedepunkt größer als 200 °C und einem Brechungsindex kleiner als 1,31 enthält.

8. Lichtleiter nach Anspruch 7, **dadurch gekennzeichnet, daß** die perfluorierte Flüssigkeit in dem Copolymer der Schicht (21) mit einem Anteil von 0,5 bis 100 Gew.-% enthalten ist.

9. Lichtleiter nach Anspruch 7 oder 8, **dadurch gekennzeichnet, daß** die perfluorierte Flüssigkeit ein Perfluorpolyether ist.

10. Lichtleiter nach Anspruch 9, **dadurch gekennzeichnet, daß** der Perfluorpolyether aus der Reihe Fomblin®, Galden® oder Krytox® stammt oder eine Mischung aus den genannten Substanzen enthält.

11. Lichtleiter nach einem der vorhergehenden Ansprüche, **dadurch gekennzeichnet, daß** die Schicht (21) aus zwei Schichten aufgebaut ist, und daß die erste Schicht 1 das Copolymer TFE/HFP, TFE/PMVE oder TFE/PPVE und die zweite Schicht das Copolymer PDD/TFE enthält.

12. Lichtleiter nach einem der vorhergehenden Ansprüche, **dadurch gekennzeichnet, daß** die Dicke der Schicht (21) zwischen 1 und 10 µm liegt.

13. Lichtleiter nach Anspruch 12, **dadurch gekennzeichnet, daß** die Dicke der Schicht (21) zwischen 2 und 6 µm liegt.

14. Lichtleiter nach einem der vorhergehenden Ansprüche, **dadurch gekennzeichnet, daß** der flüssige Kern (23) des Lichtleiters eine wässrige Salzlösung aus der Gruppe der Chloride oder Phosphate oder eine mit Wasser mischbare Flüssigkeit enthält.

15. Lichtleiter nach einem der vorhergehenden Ansprüche, **dadurch gekennzeichnet, daß** der flüssige Kern (23) eine wässrige Lösung enthält, bestehend aus CaCl$_2$ gelöst in H$_2$O oder D$_2$O, NaH$_2$PO$_4$ gelöst in H$_2$O, K$_2$HPO$_4$ gelöst in H$_2$O, Triethylenglykol oder Dimethylsulfoxid gemischt mit H$_2$O oder D$_2$O.

**Claims**

1. An optical waveguide comprising a liquid core (23) and a tubular sheath (21) of plastic material, wherein the internal surface of the tubular sheath (21) is covered with a layer (22) which includes a copolymer comprising tetrafluoroethylene (TFE) and a second component, **characterised in that** the second component is hexafluoropropylene (HFP), perfluoromethylvinylether (PMVE) or perfluoropropylvinylether (PPVE), wherein the proportion of the second component is in the range of 25 to 50% by weight.

2. An optical waveguide according to claim 1 **characterised in that** the layer (22) comprising the copolymer was applied from a solution of the copolymer in a highly fluorinated cycloalkane or aromatic solvent.

3. An optical waveguide according to claim 1 or claim 2 **characterised in that** the thickness of the layer (22) is in the range of 2 to 8 $\mu$m.

4. An optical waveguide according to one of the preceding claims **characterised in that** the tubular sheath (21) comprises a fluorine-bearing polymer material.

5. An optical waveguide according to claim 4 **characterised in that** the tubular sheath (21) comprises one of the materials Teflon® FEP, Teflon® PTFE, Teflon® PFA, Teflon ® ETFE, THV or Hyflon® MFA.

6. An optical waveguide according to one of claims 1 to 3 **characterised in that** the tubular sheath (21) comprises a non-fluorine-bearing thermoplastic material or elastomer like polyurethane or silicone.

7. An optical waveguide according to one of claims 1 to 3 **characterised in that** besides the copolymer TFE/HFP or TFE/PMVE or TFE/PPVE the layer (22) also contains a perfluorinated liquid with a boiling point of higher than 200°C and a refractive index of less than 1.31.

8. An optical waveguide according to claim 7 **characterised in that** the perfluorinated liquid is contained in the copolymer of the layer (22) in a proportion of 0.5 to 100% by weight.

9. An optical waveguide according to claim 7 or claim 8 **characterised in that** the perfluorinated liquid is a perfluoropolyether.

10. An optical waveguide according to claim 9 **characterised in that** the perfluoropolyether originates from the series Fomblin®, Galden® or Krytox® or contains a mixture of said substances.

11. An optical waveguide according to one of the preceding claims **characterised in that** the layer (22) is made up of two layers and that the first layer contains the polymer TFE/HFP, TFE/PMVE or TFE/PPVE and the second layer contains the copolymer PDD/TFE.

12. An optical waveguide according to one of the preceding claims **characterised in that** the thickness of the layer (22) is between 1 and 10 $\mu$m.

13. An optical waveguide according to claim 12 **characterised in that** the thickness of the layer (22) is between 2 and 6 $\mu$m.

14. An optical waveguide according to one of the preceding claims **characterised in that** the liquid core (23) of the optical waveguide includes an aqueous salt solution from the group of chlorides or phosphates or a water-miscible liquid.

15. An optical waveguide according to one of the preceding claims **characterised in that** the liquid core (23) contains an aqueous solution comprising $CaCl_2$ dissolved in $H_2O$ or $D_2O$, $NaH_2PO_4$ dissolved in $H_2O$, $K_2HPO_4$ dissolved in $H_2O$, triethyleneglycol or dimethylsulphoxide mixed with $H_2O$ or $D_2O$.

**Revendications**

1. Conducteur optique à âme liquide (23) et gaine tubulaire flexible (21) en matériau plastique, dans lequel la surface interne de la gaine tubulaire flexible (21) est revêtue d'une couche (22) qui contient un copolymère composé de tétrafluoroéthylène (TFE) et d'un second composant,
   **caractérisé en ce que** le second composant est de l'hexafluoropropylène (HFP), du perfluorométhylvinyléther (PMVE) ou du perfluoropropylvinyléther (PPVE), la fraction du second composant étant comprise dans la gamme allant de 25 à 50 % en masse.

2. Conducteur optique selon la revendication 1, **caractérisé en ce que** la couche (22) composée du copolymère a été appliquée à partir d'une solution du copolymère dans un solvant très fluoré de cycloalcane ou aromatique.

3. Conducteur optique selon la revendication 1 ou 2, **caractérisé en ce que** l'épaisseur de la couche (22) est comprise dans la gamme allant de 2 à 8 $\mu$m.

4. Conducteur optique selon l'une des revendications précédentes, **caractérisé en ce que** la gaine tubulaire flexible (21) se compose d'un matériau polymère contenant du fluor.

5. Conducteur optique selon la revendication 4, **caractérisé en ce que** la gaine tubulaire flexible (21) se compose d'un des matériaux FEP Téflon®, PTFE Téflon®, PFA Téflon®, ETFE Téflon®, THV ou MFA Téflon®.

**6.** Conducteur optique selon l'une des revendications 1 à 3, **caractérisé en ce que** la gaine tubulaire flexible (21) se compose d'un thermoplastique non fluoré ou d'un élastomère tel que le polyuréthane ou la silicone.

**7.** Conducteur optique selon l'une des revendications 1 à 3, **caractérisé en ce que** la couche (22), outre le copolymère de TFE/HFP ou TFE/PMVE ou TFE/PPVE, contient encore un liquide perfluoré présentant un point d'ébullition supérieur à 200 °C et un indice de réfraction inférieur à 1,31.

**8.** Conducteur optique selon la revendication 7, **caractérisé en ce que** le liquide perfluoré est contenu dans le copolymère de la couche (21) à raison d'une fraction comprise entre 0,5 et 100 % en masse.

**9.** Conducteur optique selon la revendication 7 ou 8, **caractérisé en ce que** le liquide perfluoré est un perfluoropolyéther.

**10.** Conducteur optique selon la revendication 9, **caractérisé en ce que** le perfluoropolyéther provient de la série Fomblin®, Galden® ou Krytox®, ou contient un mélange des substances nommées.

**11.** Conducteur optique selon l'une des revendications précédentes, **caractérisé en ce que** la couche (21) est élaborée à partir de deux couches et **en ce que** la première couche 1 contient le copolymère de TFE/HFP, TFE/PMVE ou TFE/PPVE, et la seconde couche contient le copolymère de PDD/TFE.

**12.** Conducteur optique selon l'une des revendications précédentes, **caractérisé en ce que** l'épaisseur de la couche (21) est comprise entre 1 et 10 $\mu$m.

**13.** Conducteur optique selon la revendication 12, **caractérisé en ce que** l'épaisseur de la couche (21) est comprise entre 2 et 6 $\mu$m.

**14.** Conducteur optique selon l'une des revendications précédentes, **caractérisé en ce que** l'âme liquide (23) du conducteur optique contient une solution saline aqueuse du groupe des chlorures ou des phosphates, ou un liquide miscible à l'eau.

**15.** Conducteur optique selon l'une des revendications précédentes, **caractérisé en ce que** l'âme liquide (23) contient une solution aqueuse composée de $CaCl_2$ dissout dans $H_2O$ ou $D_2O$, $NaH_2PO_4$ dissout dans $H_2O$, $K_2HPO_4$ dissout dans $H_2O$, triéthylèneglycol ou diméthylsulfoxyde mélangé avec $H_2O$ ou $D_2O$.

Fig. 1